# EUROPEAN PATENT APPLICATION

(11) **EP 4 541 585 A1**
(43) Date of publication of application: **23.04.2025**
(21) Application number: 23823610.3
(22) Date of filing: 19.05.2023
(51) Int. Cl.: B32B 27/10, B32B 27/36, B65D 65/40, D21H 19/20, D21H 19/82, D21H 27/30

(54) **LAMINATE, MOLDED BODY, AND METHOD FOR PRODUCING LAMINATE**

(30) Priority: 14.06.2022 JP 2022095588
(71) Applicant: Kaneka Corporation, Osaka-shi, Osaka 530-8288 (JP)
(72) Inventor: FUJITA, Masayuki, Osaka, 566-0072 (JP); SUGIYAMA, Hiroaki, Hyogo, 676-8688 (JP); OKADA, Yasunori, Osaka, 566-0072 (JP)
(74) Representative: Vossius & Partner Patentanwälte Rechtsanwälte mbB
(86) International application number: PCT/JP2023/018832
(87) International publication number: WO 2023/243309

(57) **Abstract**

A laminate includes a paper substrate layer and a first resin layer located on at least one side of the paper substrate layer. The first resin layer contains a poly(3-hydroxybutyrate) resin and polyvinyl alcohol having a degree of saponification of less than 90 mol%. The solids weight ratio of the poly(3-hydroxybutyrate) resin to the polyvinyl alcohol is from 99.8/0.2 to 95.0/5.0. The laminate can be produced by applying an aqueous coating liquid to at least one side of the paper substrate and drying the applied aqueous coating liquid to form the first resin layer on the paper substrate.

## Description

### Technical Field

The present invention relates to a laminate including a resin layer containing a poly(3-hydroxybutyrate) resin and a molded article including the laminate.

### Background Art

In recent years, environmental problems due to waste plastics have become an issue of great concern. In particular, waste plastics have caused serious marine pollution, and there is a demand for widespread use of biodegradable plastics which are degradable in the natural environment.

Various kinds of such biodegradable plastics are known. Poly(3-hydroxybutyrate) resins are thermoplastic polyesters produced and accumulated as energy storage substances in the cells of many kinds of microorganisms, and these resins are biodegradable in seawater as well as in soil and thus are attracting attention as materials that can be a solution to the above-mentioned problems.

A laminate including a biodegradable paper substrate and a poly(3-hydroxybutyrate) resin-containing layer located on the paper substrate is very promising in terms of environmental protection because both the resin and the substrate have high biodegradability.

An example of such a laminate is known from Patent Literature 1, which aims to reduce coating defects and describes coated paper including a paper substrate and a coating layer located on the paper substrate, the coating layer containing given proportions of poly(3-hydroxybutyrate-co-3-hydroxyhexanoate) which is a poly(3-hydroxybutyrate) resin and an adhesive such as polyvinyl alcohol.

### Citation List

### Patent Literature

PTL 1: WO 2021/256381

### Summary of Invention

### Technical Problem

The coated paper described in Patent Literature 1 has a certain level of water resistance and heat sealability. However, the adhesion between the coating layer and the paper substrate is insufficient, and the coating layer tends to peel from the paper substrate. Thus, for example, the coated paper cannot exhibit good heat sealability depending on heating conditions in heat sealing.

In addition, when the coated paper is molded into a paper container for use, for example, as a piece of paper tableware, the coated paper sometimes needs to have a high level of water resistance (e.g., long-term water resistance against hot water). However, Patent Literature 1 fails to give consideration to such a high level of water resistance.

In view of the above circumstances, the present invention aims to provide a laminate including a paper substrate and a resin layer located on the paper substrate and containing a poly(3-hydroxybutyrate) resin, the laminate having both good interlayer adhesion and good water resistance.

### Solution to Problem

As a result of intensive studies with the goal of solving the above problem, the present inventors have found that the problem can be solved by blending a poly(3-hydroxybutyrate) resin-containing resin layer with a given proportion of polyvinyl alcohol having a given degree of saponification. Based on this finding, the inventors have completed the present invention.

Specifically, the present invention relates to a laminate including a paper substrate layer and a first resin layer located on at least one side of the paper substrate layer, wherein the first resin layer contains a poly(3-hydroxybutyrate) resin and polyvinyl alcohol having a degree of saponification of less than 90 mol%, and a solids weight ratio of the poly(3-hydroxybutyrate) resin to the polyvinyl alcohol is from 99.8/0.2 to 95.0/5.0.

The present invention further relates to a method for producing a laminate, the method including forming a first resin layer on a paper substrate by applying an aqueous coating liquid to at least one side of the paper substrate and drying the applied aqueous coating liquid, wherein the aqueous coating liquid contains a poly(3-hydroxybutyrate) resin and polyvinyl alcohol having a degree of saponification of less than 90 mol%, and a solids weight ratio of the poly(3-hydroxybutyrate) resin to the polyvinyl alcohol is from 99.8/0.2 to 95.0/5.0.

### Advantageous Effects of Invention

The present invention can provide a laminate including a paper substrate and a resin layer located on the paper substrate and containing a poly(3-hydroxybutyrate) resin, the laminate having both good interlayer adhesion and good water resistance.

A laminate according to a preferred aspect exhibits long-term water resistance against hot water and can be molded into a paper container for use, for example, as a piece of paper tableware.

The laminate according to the preferred aspect can exhibit good heat sealability even when heat-sealed at a relatively low heating temperature.

A laminate according to another aspect further includes a second resin layer and has good adhesion (lamination quality) between the paper substrate layer and the second substrate layer.

### Description of Embodiments

Hereinafter, embodiments of the present invention will be described. The present invention is not limited to the embodiments described below.

### [Laminate]

A laminate according to one embodiment of the present disclosure includes at least a paper substrate layer and a first resin layer located on one or both sides of the paper substrate layer. The laminate can exhibit biodegradability as a whole.

The first resin layer may be located directly on the paper substrate layer or located over the paper substrate layer with another layer interposed between the first resin layer and the paper substrate layer. Preferably, the first resin layer is located directly on the paper substrate layer.

In one aspect of the present disclosure, the first resin layer may be an outermost layer of the laminate. In this case, the first resin layer can function, for example, as a heat-sealable layer, a water-resistant layer, and/or an oil-resistant layer.

In another aspect of the present disclosure, another layer may be located on the first resin layer. In this case, the first resin layer can function as an anchor coat layer between the paper substrate layer and the other layer. The other layer is not limited to a particular type and may be a resin layer or an inorganic layer. An example of the other layer is a second resin layer described later.

The paper substrate layer may be an outermost layer carrying no layer on the side opposite to that on which the first resin layer is located, or a layer may be located on the opposite side of the paper substrate layer. The layer may be a layer corresponding to the first resin layer or may be a layer other than the first resin layer.

### (Paper Substrate Layer)

The paper substrate layer is a sheet made primarily of pulp. The paper substrate can be obtained by a papermaking process using a papermaking material containing pulp mixed with a loading material and various auxiliary agents.

Paper that can be used as the paper substrate is not limited to a particular type, and examples include cup paper, kraft paper, high-quality paper, coated paper, tissue paper, glassine paper, and paperboard.

Examples of the pulp include, but are not limited to: chemical pulp such as leaf bleached kraft pulp (LBKP), needle bleached kraft pulp (NBKP), leaf unbleached kraft pulp (LUKP), needle unbleached kraft pulp ((NUKP), and sulfite pulp; mechanical pulp such as stone-ground pulp and thermomechanical pulp; wood fibers such as deinked pulp and waste paper pulp; and non-wood fibers such as those obtained from kenaf, bamboo, and hemp. Any of these types of pulp may be used in any proportion as appropriate.

Among the above examples, chemical or mechanical pulp derived from wood fibers is preferably used, and chemical pulp derived from wood fibers is more preferably used. This is because, for example, the use of such pulp offers the following advantages: foreign matter does not readily enter the paper substrate; the paper substrate resists discoloration over time when recycled as a waste paper material; and the paper substrate has a high degree of whiteness and hence presents a surface appearance suitable for printing, thus enhancing the utility of the laminate for use, in particular, as a packaging material. Specifically, the amount of chemical pulp such as LBKP or NBKP in the total pulp is preferably 80% or more and particularly preferably 100%.

Examples of the loading material include, but are not limited to: inorganic loading materials such as talc, kaolin, calcined kaolin, clay, ground calcium carbonate, precipitated calcium carbonate, white carbon, zeolite, magnesium carbonate, barium carbonate, titanium dioxide, zinc oxide, silicon oxide, amorphous silica, aluminum hydroxide, calcium hydroxide, magnesium hydroxide, zinc hydroxide, barium sulfate, and calcium sulfate; and organic loading materials such as a urea-formalin resin, a polystyrene resin, a phenolic resin, and microballoons. The loading material is not an essential material and need not be used.

Examples of the various auxiliary agents include, but are not limited to: sizing agents such as rosin, an alkyl ketene dimer (AKD), and an alkenyl succinic anhydride (ASA); dry paper strengthening agents such as a polyacrylamide polymer, a polyvinyl alcohol polymer, cationic starch, various types of modified starch, a urea-formalin resin, and a melamine-formalin resin; wet paper strengthening agents; retention aids; filterability improvers; coagulants; aluminum sulfate; bulking agents; dyes; fluorescent brighteners; pH adjusters; anti-foaming agents; ultraviolet protective agents; anti-fading agents; pitch control agents; and slime control agents. Any of these auxiliary agents may be selected and used as necessary.

The surface of the paper substrate may be treated with any of various chemicals. Examples of the chemicals include, but are not limited to, oxidized starch, hydroxyethyl etherified starch, enzyme-modified starch, polyacrylamide, polyvinyl alcohol, a surface sizing agent, a waterproofing agent, a water retention agent, a thickener, and a lubricant. One chemical may be used alone or two or more chemicals may be used in combination. These chemicals may be used in combination with a pigment.

Examples of the pigment include, but are not limited to: inorganic pigments such as kaolin, clay, engineered kaolin, delaminated clay, ground calcium carbonate, precipitated calcium carbonate, mica, talc, titanium dioxide, barium sulfate, calcium sulfate, zinc oxide, silicic acid, silicate salt, colloidal silica, and satin white; and organic pigments such as solid, hollow, and core-shell pigments. One pigment may be used alone or two or more pigments may be used in combination.

The weight per square meter of the paper substrate can be selected as appropriate depending on factors such as the desired quality of the paper substrate and the intended use of the laminate. In general, the weight per square meter of the paper substrate is preferably from 20 to 600 g/m² and more preferably from 25 to 600 g/m². When the laminate is used as wrapping paper, a paper bag, a lidding material, a paper mat, a packaging material such as a soft packaging material, or a poster for outdoor use, the weight per square meter of the paper substrate is even more preferably from 30 to 150 g/m². The "soft packaging material" refers to a flexible packaging material made with thin paper having a weight per square meter of about 30 to about 100 g/m². When the laminate is used as a piece of paper tableware such as a paper cup, a paper box, a paper plate, or a paper tray or as any other kind of paper container, the weight per square meter of the paper substrate is even more preferably from 150 to 300 g/m².

The density of the paper substrate can be selected as appropriate depending on factors such the desired quality or handleability of the paper substrate. In general, the density of the paper substrate is preferably from 0.5 to 1.0 g/cm³.

The production of the paper substrate (papermaking) is not limited to using particular means and can be accomplished by any means selected as appropriate from known papermaking machines such as a Fourdrinier machine, a cylinder machine, a short wire machine, and a twin-wire machine such as a gap former machine or hybrid former (on-top former) machine. The pH in the papermaking may be in an acidic region (acidic papermaking), a quasi-neutral region (quasi-neutral papermaking), a neutral region (neutral papermaking), or an alkaline region (alkaline papermaking). After the papermaking is performed in an acidic region, the surface of the paper layer may be coated with an alkaline chemical. The paper substrate may consist of a single layer or may be a multilayer substrate made up of two or more layers.

When the surface of the paper substrate is treated with a chemical, the surface treatment is not limited to using particular means and can be performed using any known coating device such as a rod metering size press, a pond size press, a gate roll coater, a spray coater, a blade coater, or a curtain coater.

### (First Resin Layer)

The first resin layer formed on at least one side of the paper substrate layer contains at least a poly(3-hydroxybutyrate) resin and polyvinyl alcohol having a given degree of saponification. The resin components contained in the first resin layer may be only the poly(3-hydroxybutyrate) resin and the polyvinyl alcohol or may further include another resin. The other resin used may be a biodegradable resin as described later.

The first resin layer preferably contains 50 wt% or more, more preferably 70 wt% or more, even more preferably 80 wt% or more, still even more preferably 90 wt% or more, of the poly(3-hydroxybutyrate) resin (hereinafter also abbreviated as "P3HB"). The first resin layer containing the poly(3-hydroxybutyrate) resin as a main component can exhibit biodegradability, in particular biodegradability in seawater.

The P3HB refers to a homopolymer having 3-hydroxybutyrate units and/or a copolymer of 3-hydroxybutyrate units and other hydroxyalkanoate units. In terms of biodegradability in seawater, the P3HB preferably includes a copolymer of 3-hydroxybutyrate units and other hydroxyalkanoate units.

Examples of hydroxyalkanoic acids other than 3-hydroxybutyric acid which may constitute a part of the copolymer include, but are not limited to, 4-hydroxybutyric acid, 3-hydroxypropionic acid, 3-hydroxypentanoic acid, 3-hydroxyhexanoic acid, 3-hydroxyheptanoic acid, and 3-hydroxyoctanoic acid.

Specific examples of the P3HB include poly(3-hydroxybutyrate) abbreviated as "PHB", poly(3-hydroxybutyrate-co-3-hydroxyhexanoate) abbreviated as "PHBH", poly(3-hydroxybutyrate-co-3-hydroxyvalerate) abbreviated as "P3HB3HV", poly(3-hydroxybutyrate-co-4-hydroxybutyrate) abbreviated as "P3HB4HB", poly(3-hydroxybutyrate-co-3-hydroxyoctanoate) abbreviated as "P3HB3HO", poly(3-hydroxybutyrate-co-3-hydroxyoctadecanoate) abbreviated as "P3HB3HOD", poly(3-hydroxybutyrate-co-3-hydroxydecanoate) abbreviated as "P3HB3HD", and poly(3-hydroxybutyrate-co-3-hydroxyvalerate-co-3-hydroxyhexanoate) abbreviated as "P3HB3HV3HH". Among these, PHB, PHBH, P3HB3HV, and P3HB4HB are preferred since they are easy to industrially produce.

PHBH is particularly preferred for the following reasons: its melting point and crystallinity can be changed by varying the proportions of the repeating units, and thus its physical properties such as Young's modulus and heat resistance can be adjusted and controlled to levels intermediate between those of polypropylene and polyethylene; and PHBH is a plastic that is easy to industrially produce and useful in terms of physical properties.

The first resin layer preferably contains 50 wt% or more, more preferably 70 wt% or more, even more preferably 80 wt% or more, still even more preferably 90 wt% or more, of PHBH. The resin components contained in the first resin layer may be only PHBH and the polyvinyl alcohol or may further include another resin.

Examples of the resin other than PHBH and the polyvinyl alcohol include P3HB other than PHBH. Other examples include biodegradable resins other than P3HB, as exemplified by aliphatic polyester resins such as polycaprolactone, polybutylene succinate adipate, polybutylene succinate, and polylactic acid and aliphatic-aromatic polyester resins such as polybutylene adipate terephthalate and polybutylene azelate terephthalate.

A specific method for producing PHBH is described, for example, in WO 2010/013483. Examples of commercially-available PHBH include "Kaneka Biodegradable Polymer Green Planet^{™}" of Kaneka Corporation.

The average content ratio between the constituent monomers (3HB/3HH) in PHBH is preferably from 97 to 75/3 to 25 (mol%/mol%) and more preferably from 94 to 82/6 to 18 (mol%/mol%). When the average 3HH content in PHBH is 3 mol% or more, good bonding performance can be achieved by heat sealing. The crystallization rate of PHBH having an average 3HH content of 25 mol% or less is not too low, and the production of such PHBH is relatively easy.

A PHBH resin having an average 3HH content of 3 to 25 mol% may consist of one type of PHBH or may be a mixture of at least two types of PHBH differing in the contents of the constituent monomers or a mixture of at least one type of PHBH and PHB.

The average content ratio between the constituent monomers in PHBH can be determined by a method known to those skilled in the art, such as a method described in paragraph [0047] of WO 2013/147139 or by NMR analysis. The average content ratio refers to the molar ratio between 3HB and 3HH contained in the total PHBH resin contained in the first resin layer. When a PHBH resin is a mixture of at least two types of PHBH or a mixture containing at least one type of PHBH and PHB, the average content ratio refers to the molar ratio between the constituent monomers contained in the total mixture.

The weight-average molecular weight (hereinafter also referred to as "Mw") of P3HB contained in the first resin layer is preferably from 5 × 10⁴ to 70 × 10⁴, more preferably from 10 × 10⁴ to 60 × 10⁴, and even more preferably from 15 × 10⁴ to 55 × 10⁴ in terms of ensuring both good mechanical properties and high processability. When the weight-average molecular weight of P3HB is 5 × 10⁴ or more, good mechanical properties can be achieved. When the weight-average molecular weight is 70 × 10⁴ or less, good bonding performance can be achieved by heat sealing.

The weight-average molecular weight of the P3HB can be determined as a polystyrene-equivalent molecular weight measured by gel permeation chromatography (GPC; "Shodex GPC-101" manufactured by Showa Denko K.K.) using a polystyrene gel ("Shodex K-804" manufactured by Showa Denko K.K.) as a column and chloroform as a mobile phase.

### (Polyvinyl Alcohol)

The first resin layer contains polyvinyl alcohol (hereinafter also abbreviated as "PVA") in addition to P3HB. The inclusion of PVA in the first resin layer can improve the adhesion between the paper substrate layer and the first resin layer.

PVA is typically a saponified vinyl ester polymer (polymer containing at least a vinyl ester monomer as a constituent monomer).

In the laminate according to the present disclosure, PVA having a degree of saponification of less than 90 mol% is used. Such PVA having a relatively low degree of saponification has somewhat lower hydrophilicity and exhibits increased compatibility with the P3HB, and thus the use of the PVA further enhances the adhesion between the paper substrate layer and the first resin layer, resulting in improved heat sealability or lamination quality of the laminate. PVA having a degree of saponification of 90 mol% or more is very hydrophilic and exhibits reduced compatibility with the P3HB, and the use of such PVA tends to result in insufficient adhesion between the paper substrate layer and the resin layer.

The degree of saponification of the PVA used may be 89 mol% or less. The degree of saponification may be 85 mol% or less, may be 80 mol% or less, or may be 75 mol% or less. The lower limit of the degree of saponification is not limited to a particular value, but the degree of saponification is preferably 60 mol% or more, more preferably 65 mol% or more, and even more preferably 70 mol% or more. The PVA having such a degree of saponification may be a commercially-available product. The degree of saponification of the PVA can be measured, for example, by a method as specified in JIS K 6726.

Completely saponified PVA used in Example 1 of Patent Literature 1 is 28-98 manufactured by Kuraray Co., Ltd., which has a degree of saponification of about 98 to about 99 mol%. Partially saponified ethylene-vinyl acetate copolymer (ethylene-modified PVA) used in Example 9 of Patent Literature 1 is RS-1713 manufactured by Kuraray Co., Ltd., which has a degree of saponification of 92 to 94 mol%. The degrees of saponification of these PVA products are outside the numerical range indicated above.

The average degree of polymerization of the PVA is not limited to a particular range and may be, for example, 100 or more. The average degree of polymerization is preferably 200 or more, more preferably 300 or more, and even more preferably 500 or more. The average degree of polymerization may be, for example, up to 4000 and is preferably 3000 or less, more preferably 2000 or less, and even more preferably 1000 or less. The average degree of polymerization of the PVA can be measured, for example, by a method as specified in JIS K 6726.

The PVA may contain units derived from a monomer other than vinyl alcohol and vinyl ester monomers (that is, the PVA may be one modified with the other monomer). However, olefin-modified PVA (e.g., ethylene-modified PVA) has increased lipophilicity and hence reduced affinity for the paper substrate, and the use of such PVA could reduce the adhesion between the paper substrate layer and the resin layer. For this reason, it is preferable to use PVA not modified with any olefin.

The proportions of the P3HB and the PVA in the first resin layer are set such that the solids weight ratio of the P3HB to the PVA is in the range of 99.8/0.2 to 95.0/5.0. Using the two resins in such proportions makes it possible to achieve the effect of the use of the PVA having a given degree of saponification and at the same time ensure good water resistance of the laminate. Additionally, good biodegradability derived from the P3HB can also be achieved. If the proportion of the PVA is extremely low, the adhesion between the paper substrate layer and the first resin layer is reduced, and the heat sealability or lamination quality of the laminate is insufficient. Conversely, an extremely high proportion of the PVA causes insufficient water resistance of the laminate and could also lead to reduced biodegradability of the laminate.

The solids weight ratio of the P3HB to the PVA is preferably from 99.5/0.5 to 95.0/5.0, more preferably from 99.0/1.0 to 96.0/4.0, even more preferably from 98.5/1.5 to 96.5/3.5, and particularly preferably from 98.0/2.0 to 97.0/3.0.

The first resin layer may contain one or two or more components such as: a dispersant or an emulsifier; a pH adjuster; an inorganic filler; a colorant such as a pigment or a dye; an odor absorber such as activated carbon or zeolite; a flavor such as vanillin or dextrin; a plasticizer; an oxidation inhibitor; an antioxidant; a weathering resistance improver; an ultraviolet absorber; a nucleating agent; a lubricant; a mold release; a water repellent; an antimicrobial; and a slidability improver. These components are optional components, and the first resin layer need not contain these components.

The thickness of the first resin layer is not limited to a particular range and can be chosen as appropriate in view of factors such as the performance required of the first resin layer and the productivity. Specifically, the thickness of the first resin layer is preferably from 0.5 to 30 µm, more preferably from 1 to 20 µm, and even more preferably from 2 to 15 µm. The first resin layer having such a thickness can fully exhibit its performance. Additionally, the production cost can be reduced, and handling or molding of the laminate can be relatively easy.

The method used to form the first resin layer may be extrusion lamination or thermal lamination. However, it is preferable to use a method in which: an aqueous coating liquid is prepared by dissolving or dispersing resin components including at least the P3HB and the PVA in a liquid such as water; the aqueous coating liquid is applied to the surface of the paper substrate; and the applied aqueous coating liquid is heated and dried to form the first resin layer (this method may be hereinafter referred to as the "coating method"). In particular, in the case where the first resin layer is formed directly on the paper substrate layer without any other layer therebetween, the use of the coating method is preferred because part of the coating liquid infiltrates the paper substrate layer and this infiltration is likely to further enhance the adhesion between the paper substrate layer and the first resin layer.

The aqueous coating liquid can be prepared, for example, with reference to WO 2021/075412.

The application of the aqueous coating liquid to the paper substrate is not limited to using a particular technique, and any known technique for forming a resin layer on a substrate can be used as appropriate. Specifically, a spray method, a spreading method, a slit coater method, an air knife coater method, a roll coater method, a bar coater method, a comma coater method, a blade coater method, a screen printing method, or a gravure printing method can be used. The application of the aqueous coating liquid may be preceded by the step of subjecting the paper substrate to a surface treatment such as corona treatment.

The post-application drying can be performed using a known heating technique. Examples of the heating technique include hot air heating, infrared heating, ultrasound irradiation, microwave heating, roll heating, and hot plate heating. One of these techniques may be used alone, or two or more thereof may be used in combination.

In the post-application drying, the temperature at which the heating is performed to form the first resin layer is preferably a temperature that allows melting of the resin components contained in the first resin layer, in particular the P3HB contained as a main resin component. In this case, the P3HB in the first resin layer melts first and then gets cooled and solidified, with the result that the first resin layer has a smooth surface (the surface facing away from the paper substrate layer) and that the adhesion between the paper substrate layer and the first resin layer is further enhanced and the heat sealability or lamination quality of the laminate can be further improved.

Given the foregoing, the heating temperature in the post-application drying is preferably 130°C or higher, more preferably 140°C or higher, even more preferably 150°C or higher, and particularly preferably 160°C or higher. In terms of avoiding thermal decomposition of the P3HB, the heating temperature is preferably up to 180°C.

The heating time in the post-application drying is not limited to a particular range and can be set as appropriate. The heating time may be, for example, from 10 seconds to 10 minutes and is preferably about 30 seconds to about 5 minutes.

The first resin layer's surface with increased smoothness due to the post-application drying (the surface facing away from the paper substrate layer) can exhibit a high glossiness. Specifically, the glossiness of the surface of the first resin layer, as measured at an incident angle of 60° according to "Specular glossiness-Methods of measurement" of JIS Z 8741:1997, is preferably 5% or more. The laminate including the first resin layer having such a glossiness has further enhanced adhesion between the paper substrate layer and the first resin layer and can exhibit further improved heat sealability or lamination quality.

The glossiness is preferably 7% or more, more preferably 8% or more, even more preferably 9% or more, and particularly preferably 10% or more. The upper limit of the glossiness is not limited to a particular value, and the glossiness may be, for example, 20% or less or 15% or less. If the heating temperature in the post-application drying is not high enough, the glossiness of the surface of the first resin layer is typically less than 5%.

The amount of the first resin layer applied is not limited to a particular range and can be chosen as appropriate in view of factors such as the performance required of the first resin layer and the productivity. Specifically, the weight per square meter of the first resin layer, as measured according to JIS P 8124, is preferably from 1 to 30 g/m², more preferably from 2 to 20 g/m², and even more preferably from 3 to 15 g/m². When the weight per square meter is in such a range, the first resin layer can fully exhibit its performance. Additionally, the production cost can be reduced, and handling or molding of the laminate can be relatively easy.

In the laminate according to one aspect of the present disclosure, the first resin layer can be an outermost layer of the laminate. In this case, the first resin layer can function, for example, as a heat-sealable layer, a water-resistant layer, and/or an oil-resistant layer. In this aspect, the thickness of the first resin layer may be from 0.5 to 30 µm as mentioned above, but is preferably from 3 to 25 µm and more preferably from 5 to 20 µm.

The heat-sealable layer is a layer having properties suitable for heat sealing. Specifically, the heat-sealable layer is a layer that can be bonded to a bonding target by thermal pressure bonding. The bonding target may be another portion of the same heat-sealable layer, may be the paper substrate layer, or may be an article made of a different material.

The laminate according to the present disclosure can exhibit good heat sealability even when the heating temperature in heat sealing is relatively low. The heating temperature is not limited to a particular range and may be, for example, from about 110 to about 160°C. The heating temperature is preferably from 120 to 150°C and more preferably from 125 to 140°C.

In a preferred aspect of the present disclosure, the water-resistant layer refers to a layer for which a water absorptiveness (Cobb value), as measured using 90°C hot water over a contact time of 1800 seconds according to "Paper and board-Determination of water absorptiveness-Cobb method" of JIS P 8140:1998, is 20 g/m² or less. When the first resin layer exhibits such long-term water resistance against hot water, the laminate according to the present disclosure can be molded into a paper container for use, for example, as a piece of paper tableware. The water absorptiveness is preferably 10 g/m² or less and more preferably 5 g/m² or less.

In a preferred aspect of the present disclosure, the oil-resistant layer refers to a layer for which an average kit number, as determined by measuring the kit number at five points on the surface of the layer according to "Paper and paperboard-Oil repellency test method-Kit method" of JAPAN TAPPI No. 41:2000, is 10 or more. The average kit number is preferably 11 or more and more preferably 12 or more.

### (Second Resin Layer)

A laminate according to another aspect of the present disclosure may further include a second resin layer located on the first resin layer. In the present aspect, the paper substrate layer, the first resin layer, and the second resin layer are arranged in this order.

In the present aspect, the first resin layer functions as an anchor coat layer between the paper substrate layer and the second resin layer, and there is good adhesion between the paper substrate layer and the first resin layer. Thus, the lamination quality (lamination strength) between the paper substrate layer and the second resin layer can also be improved. Additionally, the presence of the second resin layer can impart a high level of water resistance and oil resistance to the laminate.

In this aspect, the first resin layer has an ability to ensure bonding between the paper substrate layer and the second resin layer. The thickness of the first resin layer may be from 0.5 to 30 µm as described above, but is preferably from 0.7 to 15 µm and more preferably from 1 to 10 µm.

The second resin layer may be an outermost layer of the laminate, or the laminate may further include another layer located on the second resin layer.

Preferably, the second resin layer contains a biodegradable resin and exhibits biodegradability. In this case, the biodegradability of the laminate as a whole can be enhanced. Biodegradable resins that can be used include resins as mentioned above for the first resin layer, and specific examples include P3HB, aliphatic polyester resins, and aliphatic-aromatic polyester resins.

In terms of affinity for the first resin layer, the second resin layer preferably contains at least P3HB. In this case, the adhesion between the first resin layer and the second resin layer can be further enhanced. The second resin layer need not contain the PVA described above.

The second resin layer preferably contains 50 wt% or more, more preferably 70 wt% or more, even more preferably 80 wt% or more, still even more preferably 90 wt% or more, of P3HB. The second resin layer may contain 95 wt% or more of P3HB. The second resin layer may contain only P3HB as a resin component or may further contain another resin. The other resin used may be any of the biodegradable resins as mentioned above.

The types of P3HB that can be used in the second resin layer are as described above for P3HB that can be used in the first resin layer and will therefore not be described in detail. P3HB that can be used in the second resin layer preferably includes a copolymer containing 3-hydroxybutyrate units and other hydroxyalkanoate units and is particularly preferably PHBH, although this is not limiting.

The second resin layer preferably contains 50 wt% or more, more preferably 70 wt% or more, even more preferably 80 wt% or more, still even more preferably 90 wt% or more, of PHBH. The second layer may contain 95 wt% or more of PHBH. The second resin layer may contain only PHBH as a resin component or may further contain another resin.

The average content ratio between the constituent monomers, and the weight-average molecular weight, of P3HB that can be used in the second resin layer are also as described above for P3HB that can be used in the first resin layer, and will therefore not be described in detail.

The second resin layer may contain additives usually added to resin materials, to the extent that the additives do not diminish the effect of the invention. Examples of such additives include: inorganic fillers; colorants such as pigments and dyes; odor absorbers such as activated carbon and zeolite; flavors such as vanillin and dextrin; plasticizers; oxidation inhibitors; antioxidants; weathering resistance improvers; ultraviolet absorbers; nucleating agents; lubricants; mold releases; water repellents; antimicrobials; and slidability improvers. One of these additives may be used alone, or two or more thereof may be used in combination. The additives are optional components, and the second resin layer need not contain these additives. At least one additive selected from the group consisting of a lubricant and an inorganic filler is preferably used to improve the separability of the second resin layer from the surface of pressure bonding means such as a cooling roll used in a lamination process for forming the second resin layer.

Examples of the lubricant include: aliphatic amide compounds, as exemplified by saturated or unsaturated fatty acid amides such as lauramide, myristamide, palmitamide, stearamide, behenamide, oleamide, and erucamide and alkylene fatty acid amides such as methylene bis(stearamide) and methylene bis(stearamide); and pentaerythritol.

The amount of the lubricant in the second resin layer is preferably from 0.1 to 2 parts by weight and more preferably from 0.2 to 1 parts by weight per 100 parts by weight of the (total) amount of the resin component(s) contained in the second resin layer. When the amount of the lubricant is 0.1 parts by weight or more, the addition of the lubricant can provide the separability improving effect. When the amount of the lubricant is 2 parts by weight or less, bleeding and attachment of the lubricant to the surface of pressure bonding means such as a cooling roll can be avoided during pressure bonding, and continuous processing can be performed for a long period of time.

Examples of the inorganic filler include talc, calcium carbonate, mica, silica, clay, kaolin, titanium oxide, alumina, and zeolite. The average particle size of the inorganic filler is preferably 0.5 µm or more.

The amount of the inorganic filler in the second resin layer is preferably from 0.5 to 5 parts by weight and more preferably from 1 to 3 parts by weight per 100 parts by weight of the (total) amount of the resin component(s) contained in the second resin layer. When the amount of the inorganic filler is 0.5 parts by weight or more, the addition of the inorganic filler can provide the separability improving effect. When the amount of the inorganic filler is 5 parts by weight or less, cracking of the second resin layer can be avoided.

The thickness of the second resin layer is not limited to a particular range and can be chosen as appropriate in view of factors such as the performance required of the second resin layer and the productivity. The thickness of the second resin layer may be, for example, from about 5 to about 100 µm and is preferably from 10 to 80 µm and more preferably from 20 to 60 µm. The second resin layer is preferably thicker than the first resin layer.

The coating method described above may be used to form the second resin layer on the first resin layer. However, in terms of the adhesion to the first resin layer, the productivity, or the prevention of thermal deterioration, the second resin layer is preferably formed on the surface of the first resin layer by extrusion lamination or thermal lamination.

The extrusion lamination can be performed using a common extrusion lamination method. Specifically, a molten resin material is extruded as a film from a T-die, then the extruded resin material is cooled and simultaneously pressure-bonded to the surface of the first resin layer of the laminate by means of a cooling roll, and immediately after the pressure bonding the resin material is separated from the cooling roll. In this manner, the second resin layer can be formed to produce a three-layered laminate.

In the case where the second resin layer is formed by the extrusion lamination, the resin temperature immediately after melt extrusion from the end of the T-die is preferably at or above the melting point(s) of the resin component(s) contained in the second resin layer and below the decomposition temperature(s) of the resin component(s).

The thermal lamination can be performed using a common thermal lamination method. Specifically, first, a molten resin material is extruded, for example, from a T-die, and the extruded resin material is cooled by means of a cooling roll to form a molded film containing the resin material. The obtained molded film is subsequently pressure-bonded to the surface of the first resin layer of the laminate by means such as a heat roll, and thus a three-layered laminate can be produced.

In the case where the second resin layer is formed by the thermal lamination, it is preferable that, in obtaining the molded film used to form the second resin layer, the resin temperature immediately after melt extrusion from the end of the T-die be at or above the melting point(s) of the resin component(s) contained in the second resin layer and below the decomposition temperature(s) of the resin component(s).

In order to, for example, enhance the adhesion between the second resin layer and the first resin layer, the surface of the first resin layer may be subjected to a treatment such as corona treatment, flame treatment, or ozone treatment.

### [Molded Article]

A molded article according to one embodiment of the present disclosure (the molded article may be hereinafter referred to as the "present molded article") includes the present laminate and has a desired size and shape. Being made with the laminate including the first resin layer containing P3HB, the present molded article is advantageous for various uses.

The present molded article is not limited to a particular product and may be any product including the present laminate. Examples of the present molded article include paper, a film, a sheet, a tube, a plate, a rod, a container (e.g., a bottle), a bag, and a part. In terms of addressing marine pollution, the present molded article is preferably a bag or a bottle.

In one embodiment of the present disclosure, the present molded article may be the present laminate itself or may be one produced by secondary processing of the present laminate.

The present molded article including the present laminate subjected to secondary processing is suitable for use as any of various kinds of packaging materials or containers such as shopping bags, various other kinds of bags, packaging materials for foods or confectionery products, cups, trays, and cartons. That is, the present molded article is suitable for use in various fields such as food industry, cosmetic industry, electronic industry, medical industry, and pharmaceutical industry. Since the present laminate contains a resin having high adhesion to the substrate and having good heat resistance, the present molded article is more preferably used as a container for a hot substance. Examples of such a container include: liquid containers such as, in particular, cups for foods or beverages such as instant noodles, instant soups, and coffee; and trays used for prepared foods, boxed lunches, or microwavable foods.

Any secondary processing as described above can be performed using a method identical to that used for secondary processing of conventional resin-laminated paper or coated paper. That is, the secondary processing can be performed by means such as any kind of bag-making machine or form-fill-seal machine. Alternatively, the present laminate may be processed using a device such as a paper cup molding machine, a punching machine, or a case former. In any of these processing machines, any known technique can be used for bonding of the present laminate. Examples of the technique that can be used include heat sealing, impulse sealing, ultrasonic sealing, high-frequency sealing, hot air sealing, and flame sealing.

The heat sealing temperature at which the present laminate is heat-sealed depends on the bonding technique used. For example, in the case where the present laminate is heat-sealed using a heat sealing tester equipped with a sealing bar, the heat sealing temperature may be set so that the surface temperature of the first or second resin layer is typically 180°C or lower, preferably 170°C or lower, and more preferably 160°C or lower. When the surface temperature of the first or second resin layer is in this range, melting and leakage of the resin in the vicinity of the sealed portion can be avoided to ensure a suitable thickness of the resin layer and a suitable seal strength. The surface temperature may be 150°C or lower or may be 140°C or lower since the present laminate can exhibit good bonding performance even when heat-sealed at a low temperature.

In the case of using a heat sealing tester equipped with a sealing bar, the surface temperature is typically at least 100°C, preferably at least 110°C, and more preferably at least 120°C. When the surface temperature is in this range, suitable bonding can be ensured at the sealed portion.

The heat sealing pressure at which the present laminate is heat-sealed depends on the bonding technique used. For example, in the case where the present laminate is heat-sealed using a heat sealing tester equipped with a sealing bar, the heat sealing pressure is typically 0.1 MPa or more and preferably 0.5 MPa or more. When the heat sealing pressure is in this range, suitable bonding can be ensured at the sealed portion. In the case of using a heat sealing tester equipped with a sealing bar, the heat sealing pressure is typically up to 1.0 MPa and preferably up to 0.75 MPa. When the heat sealing pressure is in this range, thinning of the sealed edge can be avoided to ensure a suitable seal strength.

The present molded article may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a different material than the present molded article. The material of the other molded article is also preferably biodegradable.

In the following items, preferred aspects of the present disclosure are listed. The present invention is not limited to the following items.

### [Item 1]

A laminate including a paper substrate layer and a first resin layer located on at least one side of the paper substrate layer, wherein
the first resin layer contains a poly(3-hydroxybutyrate) resin and polyvinyl alcohol having a degree of saponification of less than 90 mol%, and
a solids weight ratio of the poly(3-hydroxybutyrate) resin to the polyvinyl alcohol is from 99.8/0.2 to 95.0/5.0.

### [Item 2]

The laminate according to item 1, wherein
the poly(3-hydroxybutyrate) resin includes a copolymer of 3-hydroxybutyrate units and other hydroxyalkanoate units.

### [Item 3]

The laminate according to item 2, wherein
the other hydroxyalkanoates are 3-hydroxyhexanoate units.

### [Item 4]

The laminate according to any one of items 1 to 3, wherein
the first resin layer has a surface facing away from the paper substrate layer, and
a glossiness of the surface of the first resin layer, as measured at an incident angle of 60° according to "Specular glossiness-Methods of measurement" of JIS Z 8741:1997, is 5% or more.

### [Item 5]

The laminate according to any one of items 1 to 4, wherein
the first resin layer has a thickness of 0.5 to 30 µm.

### [Item 6]

The laminate according to any one of items 1 to 5, further including a second resin layer located on the first resin layer, wherein
the second resin layer contains a poly(3-hydroxybutyrate) resin.

### [Item 7]

The laminate according to any one of items 1 to 6, for use as a packaging material.

### [Item 8]

The laminate according to any one of items 1 to 6, for use as a paper container.

### [Item 9]

A molded article including the laminate according to any one of items 1 to 8.

### [Item 10]

A method for producing a laminate, the method including forming a first resin layer on a paper substrate by applying an aqueous coating liquid to at least one side of the paper substrate and drying the applied aqueous coating liquid, wherein
the aqueous coating liquid contains a poly(3-hydroxybutyrate) resin and polyvinyl alcohol having a degree of saponification of less than 90 mol%, and
a solids weight ratio of the poly(3-hydroxybutyrate) resin to the polyvinyl alcohol is from 99.8/0.2 to 95.0/5.0.

### [Item 11]

The method according to item 10, wherein
a weight per square meter of the first resin layer, as measured according to JIS P 8124, is from 1 to 30 g/m².

### [Item 12]

The method according to item 10 or 11, wherein
the drying is accomplished by heating to a temperature of 130 to 180°C.

### [Item 13]

The method according to any one of items 10 to 12, further including forming a second resin layer on the first resin layer, wherein
the second resin layer contains a poly(3-hydroxybutyrate) resin.

### [Item 14]

The method according to item 13, wherein
the second resin layer is formed by extrusion lamination or thermal lamination.

### Examples

Hereinafter, the present invention will be specifically described based on examples. The technical scope of the present invention is not limited by the examples given below.

### (Method for Evaluating Coating Quality of Coated Paper)

To evaluate the quality of the coating layer, the glossiness of the surface of the coating layer was measured using a gloss meter (IG-320 manufactured by Horiba, Ltd.) at an incident angle of 60° according to "Specular glossiness-Methods of measurement" of JIS Z 8741:1997. A higher value of the glossiness indicates that the surface of the coating layer has higher smoothness.

### (Method for Evaluating Water Resistance of Coated Paper or Laminated Paper)

The water absorptiveness (Cobb value) of the coating or lamination layer was measured at two points on the surface of the coating or lamination layer using 90°C hot water over a contact time of 1800 seconds according to "Paper and board-Determination of water absorptiveness-Cobb method" of JIS P 8140:1998.

The average of the two measured values of the water absorptiveness was used as a water resistance index, and the water resistance was rated according to the criteria listed below. The rating "Excellent", "Good", or "Average" means that the water resistance is satisfactory for practical use.

### [Rating Criteria]

Excellent: The average water absorptiveness (Cobb value) is 5 g/m² or less.
Good: The average water absorptiveness (Cobb value) is from more than 5 to 10 g/m².
Average: The average water absorptiveness (Cobb value) is from more than 10 to 20 g/m².
Poor: The average water absorptiveness (Cobb value) is more than 20 g/m².

### (Method for Evaluating Oil Resistance of Coated Paper or Laminated Paper)

The kit number was measured at five points on the surface of the coating or lamination layer according to "Paper and paperboard-Oil repellency test method-Kit method" of JAPAN TAPPI No. 41:2000.

The average of the five measured values of the kit number was used as an oil resistance index, and the oil resistance was rated according to the criteria listed below. The rating "Excellent", "Good", or "Average" means that the oil resistance is satisfactory for practical use.

### [Rating Criteria]

Excellent: The average kit number is 12.
Good: The average kit number is from 11 to less than 12.
Average: The average kit number is from 10 to less than 11.
Poor: The average kit number is less than 10.

### (Method for Evaluating Adhesion between Coating Layer and Paper Substrate)

A cellophane tape (width = 25 mm) was attached to the surface of the coating layer. A rubber roller with a width of 130 mm and a weight of 1.8 kg was moved back and forth five times under its own weight on the cellophane tape, and thus the cellophane tape was closely adhered to the surface of the coating layer.

Immediately after that, the cellophane tape was rapidly peeled off, and the following was calculated: the proportion of the area over which the coating layer stuck to the cellophane tape and peeled from the surface of the paper substrate (the area over which interfacial failure occurred) to the area over which the cellophane tape was attached to the surface of the coating layer or the proportion of the area over which the paper substrate broke due to partially sticking to the cellophane tape together with the coating layer (the area over which failure occurred in the paper substrate) to the area over which the cellophane tape was attached to the surface of the coating layer. The adhesion of the coating layer to the paper substrate was rated according to the criteria listed below. The rating "Excellent", "Good", or "Average" means that the adhesion is satisfactory for practical use.

In the case where there was a difference between the rating based on the proportion of the area over which the coating layer peeled and the rating based on the proportion of the area over which the paper substrate broke, the lower of the ratings was adopted.

### [Rating Criteria]

Excellent: The proportion of the area over which the coating layer peeled is less than 5% or the proportion of the area over which the paper substrate broke is 95% or more.
Good: The proportion of the area over which the coating layer peeled is from 5 to less than 10% or the proportion of the area over which the paper substrate broke is from 90 to less than 95%.
Average: The proportion of the area over which the coating layer peeled is from 10 to less than 30% or the proportion of the area over which the paper substrate broke is from 70 to less than 90%.
Poor: The proportion of the area over which the coating layer peeled is 30% or more or the proportion of the area over which the paper substrate broke is less than 70%.

### (Method for Evaluating Heat Sealability of Coated Paper)

The coated paper obtained was cut to give two 25-mm-wide strips. The coating layers of the strips were brought into contact and heat-sealed to each other at a pressing temperature of 130°C and a pressing pressure of 2 kgf/cm² over a pressing time of 0.5 seconds.

The heat seal strength of the test specimen was measured using Autograph; specifically, the paper substrates on the opposite sides of the test specimen were held by chucks, and the test specimen was subjected to 180° peeling. The peeled regions were visually inspected, and the heat sealability was rated according to the criteria listed below.

The rating "Good" or "Average" means that the heat sealability is satisfactory for practical use.

### [Rating Criteria]

Good: Peeling occurs in the paper substrates (the paper substrates break).
Average: Peeling occurs mostly in the paper substrates (the paper substrates break).
Poor: The paper substrates do not break, and peeling occurs between each paper substrate and a corresponding one of the coating layers or between the coating layers.

### (Method for Evaluating Lamination Quality of Laminated Paper)

The laminated paper obtained was cut to give a 25-mm-wide strip (having non-lamination portions), and the lamination quality of the test specimen was evaluated using Autograph; specifically, a non-lamination portion of the paper substrate and a non-lamination portion of the film were held by chucks, and the test specimen was subjected to 180° peeling. The peeled regions were visually inspected, and the lamination quality was rated according to the criteria listed below. The rating "Good" means that the lamination quality is satisfactory for practical use.

### [Rating Criteria]

Good: Cohesive failure occurs in the paper, and the paper fibers stick to the film.
Average: Cohesive failure occurs in the paper, and the paper fibers stick to a part of the film.
Poor: Cohesive failure dose not occur in the paper, and the film peels easily without resistance.

### (Evaluation of Biodegradability of Coating Layer Component)

A dry powder of the coating layer component was passed through a 100-mesh filter, and the dry powder was tested for biodegradation in seawater by means of a BOD measurement device (OxiTop Series, manufactured by Central Kagaku Corp.). The temperature in the incubator was set to 30 ± 1°C (under stirring) and the test period was 180 days. The degree of biodegradation was calculated from the microbial oxygen consumption, and the biodegradability was rated according to the criteria listed below.

### [Rating Criteria]

Good: The degree of biodegradation reaches 90% or more within 180 days.
Poor: The degree of biodegradation does not reach 90% within 180 days.

### (Preparation of Aqueous Suspension Containing PHBH Separated from Microorganism)

First, *Ralstonia eutropha* incorporating a 3-hydroxyalkanoate copolymer synthase gene derived from *Aeromonas caviae* (this transformed microorganism is formerly known as *Alcaligenes eutrophus* AC32, deposit number: FERM BP-6038) was cultured by a method as taught in J. Bacteriol., 179, pp. 4821-4830 (1997) to obtain microbial cells containing about 67 wt% of PHBH. In the PHBH, the content ratio between repeating units (3-hydroxybutyrate units/3-hydroxyhexanoate units) was 89/11 (mol/mol).

Subsequently, the culture fluid was centrifuged (5000 rpm, 10 min) to separate the microbial cells in the form of a paste from the culture fluid. Water was added to the microbial cells to prepare a suspension containing 75 g dry weight/L of the microbial cells. The microbial cells in the suspension were stirred and physically disrupted to solubilize cellular components other than the PHBH while the suspension was maintained at a pH of 11.7 by adding an aqueous solution of sodium hydroxide as an alkali to the suspension. The solubilization was followed by centrifugation (3000 rpm, 10 min) to obtain a precipitate. The precipitate was washed with water to separate PHBH having a weight-average molecular weight of about 26 × 10⁴, a 3HH molar fraction of 11%, and a purity of 91 wt%, and a suspension containing 75 g/L of the PHBH was obtained.

The suspension was poured into a stirring vessel equipped with a pH electrode and was held at 70°C. The pH electrode was connected to Labo-controller MDL-6C manufactured by B.E. Marubishi Co., Ltd., and settings were made such that once the pH of the suspension decreased below a preset value, a peristaltic pump was operated to add an aqueous solution of sodium hydroxide to the suspension until the pH reached the preset value. The pH value in the Labo-controller was set to 10, and a 30% hydrogen peroxide solution was added to the suspension such that the hydrogen peroxide concentration was 5 wt% based on the weight of the polymer (0.375 wt% based on the weight of the suspension). After the addition of the hydrogen peroxide solution, the suspension was stirred for 1 hour. Subsequently, the suspension was subjected to centrifugation, which was followed by two times of washing with water and then two times of washing with methanol. A 30% hydrogen peroxide solution was further added as a preservative such that the hydrogen peroxide concentration was 0.1 wt% based on the weight of solids (PHBH) in the aqueous suspension. As a result of these procedures, an aqueous suspension (A) having a PHBH concentration of 52 wt% was obtained. In the aqueous suspension (A), the protein content was 1,500 ppm in solids, and the PHBH purity was 99.8 wt% or more.

### [Example 1]

### (Preparation of Coating Layer-Forming Coating Liquid 1)

The aqueous PHBH suspension (A) was mixed with an adhesive (polyvinyl alcohol manufactured by Kuraray Co., Ltd.: L-10, degree of saponification = 71.5 to 73.5 mol%) at a suspension (A)/adhesive solids weight ratio of 98.0/2.0. Water was added to the mixture, which was then stirred to prepare a coating layer-forming coating liquid 1 in which the concentration of the total solids of the PHBH and the adhesive was 40 wt%.

### (Production of Coated Paper)

The coating layer-forming coating liquid 1 was applied by a bar coater method to one side of a paper substrate (one side-glazed paper with a weight per square meter of 50 g/m²) such that the coating layer would have a dry weight per square meter of 10.0 g/m² (thickness = 8 µm), and the applied coating liquid 1 was dried at a drying temperature of 160°C for 2 minutes to obtain coated paper.

### [Example 2]

Coated paper was obtained in the same manner as in Example 1, except that the solids weight ratio of the aqueous PHBH dispersion to the adhesive in the coating layer-forming coating liquid 1 was changed to 95.0/5.0.

### [Example 3]

Coated paper was obtained in the same manner as in Example 1, except that the solids weight ratio of the aqueous PHBH dispersion to the adhesive in the coating layer-forming coating liquid 1 was changed to 99.5/0.5.

### [Example 4]

### (Preparation of Coating Layer-Forming Coating Liquid 2)

The aqueous PHBH suspension (A) was mixed with an adhesive (polyvinyl alcohol manufactured by Kuraray Co., Ltd.: 5-74, degree of saponification = 72.5 to 74.5 mol%) at a suspension (A)/adhesive solids weight ratio of 98.0/2.0. Water was added to the mixture, which was then stirred to prepare a coating layer-forming coating liquid 2 in which the concentration of the total solids of the PHBH and the adhesive was 40 wt%.

### (Production of Coated Paper)

Coated paper was obtained in the same manner as in Example 1, except that the coating layer-forming coating liquid 1 was replaced with the coating layer-forming coating liquid 2.

### [Example 5]

Coated paper was obtained in the same manner as in Example 4, except that the solids weight ratio of the aqueous PHBH dispersion to the adhesive in the coating layer-forming coating liquid 2 was changed to 95.0/5.0.

### [Example 6]

### (Preparation of Coating Layer-Forming Coating Liquid 3)

The aqueous PHBH suspension (A) was mixed with an adhesive (polyvinyl alcohol manufactured by Kuraray Co., Ltd.: 5-88, degree of saponification = 86.5 to 89.0 mol%) at a suspension (A)/adhesive solids weight ratio of 98.0/2.0. Water was added to the mixture, which was then stirred to prepare a coating layer-forming coating liquid 3 in which the concentration of the total solids of the PHBH and the adhesive was 40 wt%.

### (Production of Coated Paper)

Coated paper was obtained in the same manner as in Example 1, except that the coating layer-forming coating liquid 1 was replaced with the coating layer-forming coating liquid 3.

### [Example 7]

Coated paper was obtained in the same manner as in Example 6, except that the solids weight ratio of the aqueous PHBH dispersion to the adhesive in the coating layer-forming coating liquid 3 was changed to 95.0/5.0.

### [Comparative Example 1]

### (Preparation of Coating Layer-Forming Coating Liquid 4)

Water was added to the aqueous PHBH suspension (A), which was then stirred to prepare a coating layer-forming coating liquid 4 having a solids concentration of 40 wt%.

### (Production of Coated Paper)

Coated paper was obtained in the same manner as in Example 1, except that the coating layer-forming coating liquid 1 was replaced with the coating layer-forming coating liquid 4.

### [Comparative Example 2]

Coated paper was obtained in the same manner as in Example 1, except that the solids weight ratio of the aqueous PHBH dispersion to the adhesive in the coating layer-forming coating liquid 1 was changed to 90.0/10.0.

### [Comparative Example 3]

### (Preparation of Coating Layer-Forming Coating Liquid 5)

The aqueous PHBH suspension (A) was mixed with an adhesive (polyvinyl alcohol manufactured by Kuraray Co., Ltd.: 5-98, degree of saponification = 98.0 to 99.0 mol%) at a suspension (A)/adhesive solids weight ratio of 98.0/2.0. Water was added to the mixture, which was then stirred to prepare a coating layer-forming coating liquid 5 in which the concentration of the total solids of the PHBH and the adhesive was 40 wt%.

### (Production of Coated Paper)

Coated paper was obtained in the same manner as in Example 1, except that the coating layer-forming coating liquid 1 was replaced with the coating layer-forming coating liquid 5.

The sheets of coated paper obtained in Examples 1 to 7 and Comparative Examples 1 to 3 were evaluated for coating quality, water resistance, oil resistance, adhesion between the coating layer and the paper substrate, and heat sealability by the methods described above. The results are listed in Table 1.

**[Table 1]**

| Coated paper: Two-layer structure | | | Ex. 1 | Ex. 2 | Ex. 3 | Ex. 4 | Ex. 5 | Ex. 6 | Ex. 7 | Comp. 1 | Comp. 2 | Comp. 3 |
|---|---|---|---|---|---|---|---|---|---|---|---|---|
| Coating layer | PHBH | | 98 | 95 | 99.5 | 98 | 95 | 98 | 95 | 100 | 90 | 98 |
| | PVA 1 (L-10) | Degree of saponification 71.5-73.5 | 2 | 5 | 0.5 | | | | | | 10 | |
| | PVA 2 (5-74) | Degree of saponification 72.5-74.5 | | | | 2 | 5 | | | | | |
| | PVA 3 (5-88) | Degree of saponification 86.5-89.0 | | | | | | 2 | 5 | | | |
| | PVA 4 (5-98) | Degree of saponification 98.0-99.0 | | | | | | | | | | 2 |
| | Weight per square meter | g/m² | 10 | 10 | 10 | 10 | 10 | 10 | 10 | 10 | 10 | 10 |
| | Thickness | µm | 8 | 8 | 8 | 8 | 8 | 8 | 8 | 8 | 8 | 8 |
| Evaluation results of coated paper | 60° glossiness | % | 9.8 | 10.1 | 9.9 | 10.2 | 10.1 | 9.9 | 10.5 | 10.9 | 10.2 | 10.8 |
| | Water resistance | | Good | Good | Good | Good | Good | Good | Good | Good | Poor | Good |
| | Oil resistance | | Good | Good | Good | Good | Good | Good | Good | Good | Good | Good |
| | Adhesion to paper substrate | | Excellent | Excellent | Good | Excellent | Excellent | Excellent | Excellent | Poor | Good | Average |
| | Heat sealability | | Good | Good | Good | Good | Good | Good | Good | Poor | Average | Poor |
| Coating layer component | Biodegradability | | Good | Good | Good | Good | Good | Good | Good | Good | Poor | Good |

Table 1 reveals that in the coated paper of each of Examples 1 to 7, the coating layer contained given proportions of P3HB and PVA having a given degree of saponification and that the coated paper had good water resistance, high adhesion between the coating layer and the paper substrate, and good heat sealability.

In contrast, the coated paper of Comparative Example 1, in which the coating layer did not contain PVA, had low adhesion between the coating layer and the paper substrate and insufficient heat sealability.

The coated paper of Comparative Example 2, in which the coating layer contained PVA having a given degree of saponification but the proportion of the PVA was high, had insufficient water resistance. Additionally, the high proportion of the PVA caused reduced biodegradability of the coating layer.

The coated paper of Comparative Example 3, in which the PVA contained in the coating layer did not have a given degree of saponification, had somewhat low adhesion between the coating layer and the paper substrate and insufficient heat sealability.

### [Example 8]

### (Production of Laminate by Extrusion Lamination)

First resin layer-coated paper was obtained in the same manner as in Example 1, except that the paper substrate was changed to kraft paper with a weight per square meter of 200 g/m², the solids concentration of the coating layer-forming coating liquid 1 was changed to 25 wt%, the amount of the coating layer-forming coating liquid 1 applied was changed to give a dry weight per square meter of 3.0 g/m² (thickness = 2.5 µm).

Pellets were prepared as a material for forming a second resin layer. Specifically, 100 parts by weight of a PHBH powder (powder of PHBH which have a weight-average molecular weight of 65 × 10⁴ and in which the 3-hydroxybutyrate units/3-hydroxyhexanoate units content ratio is 85/15 (mol/mol)) was dry-blended with 0.2 parts by weight of behenamide and 1.0 parts by weight of pentaerythritol, and the blend was melted, kneaded, and extruded as a strand by using a twin-screw extruder at a set temperature of 150°C and a screw rotational speed of 100 rpm. The strand was solidified by passing it through 40°C hot water, and the solidified strand was cut into pellets.

Subsequently, the obtained pellets were placed into a single-screw extruder equipped with a T-die, from which a melt of the pellets was extruded onto the first resin layer of the first resin layer-coated paper produced as above under controlled conditions where the resin temperature was 175°C immediately below the die. In this manner, the first resin layer was laminated with a second resin layer having a thickness of 30 µm, and laminated paper was obtained as a laminate including the first and second resin layers.

### [Example 9]

Laminated paper was obtained in the same manner as in Example 8, except that the solids weight ratio of the aqueous PHBH dispersion to the adhesive in the coating layer-forming coating liquid 1 was changed to 95.0/5.0.

### [Example 10]

Laminated paper was obtained in the same manner as in Example 8, except that the amount of the coating layer-forming coating liquid 1 applied was changed to give a dry weight per square meter of 1.0 g/m² (thickness = 0.8 µm).

### [Example 11]

Laminated paper was obtained in the same manner as in Example 8, except that the coating layer-forming coating liquid 3 was used instead of the coating layer-forming coating liquid 1.

### [Example 12]

Laminated paper was obtained in the same manner as in Example 11, except that the solids weight ratio of the aqueous PHBH dispersion to the adhesive in the coating layer-forming coating liquid 3 was changed to 95.0/5.0.

### [Example 13]

### (Production of Laminate by Thermal Lamination)

First resin layer-coated paper was obtained in the same manner as in Example 8.

Pellets were prepared as a material for forming a second resin layer. Specifically, 100 parts by weight of a PHBH powder identical to that used in Example 8 was dry-blended with 0.2 parts by weight of behenamide and 1.0 parts by weight of pentaerythritol, and the blend was melted, kneaded, and extruded as a strand by using a twin-screw extruder at a set temperature of 150°C and a screw rotational speed of 100 rpm. The strand was solidified by passing it through 40°C hot water, and the solidified strand was cut into pellets.

Subsequently, the obtained pellets were placed into a single-screw extruder equipped with a T-die, from which a melt of the pellets was extruded. The extruded material was taken up by a cooling roll set to 60°C, and thus a film-shaped molded article with a thickness of 30 µm was obtained.

After that, the film-shaped molded article was placed onto the first resin layer of the first resin layer-coated paper, and the coated paper and the film-shaped molded article were subjected to thermal lamination. Specifically, the coated paper and the film-shaped molded article were pressed between a heating roll and a cooling roll in such a manner that the heating roll was in contact with the paper surface and the cooling roll was in contact with the film surface, and the thermal lamination conditions were adjusted to control the surface temperature of the film-shaped molded article to 170°C. As a result, laminated paper including the film-shaped molded article as a second resin layer was obtained.

### [Comparative Example 4]

Laminated paper was obtained in the same manner as in Example 8, except that the coating layer-forming coating liquid 4 was used instead of the coating layer-forming coating liquid 1.

### [Comparative Example 5]

Laminated paper was obtained in the same manner as in Example 8, except that the coating layer-forming coating liquid 5 was used instead of the coating layer-forming coating liquid 1.

### [Comparative Example 6]

Laminated paper was obtained in the same manner as in Comparative Example 5, except that the solids weight ratio of the aqueous PHBH dispersion to the adhesive in the coating layer-forming coating liquid 5 was changed to 95.0/5.0.

The sheets of laminated paper obtained in Examples 8 to 13 and Comparative Examples 4 to 6 were evaluated for coating quality, water resistance, oil resistance, and lamination quality by the methods described above. The results are listed in Table 2.

**[Table 2]**

| Laminated paper: Three-layer structure | | | Ex. 8 | Ex. 9 | Ex. 10 | Ex. 11 | Ex. 12 | Ex. 13 | Comp. 4 | Comp. 5 | Comp. 6 |
|---|---|---|---|---|---|---|---|---|---|---|---|
| Coating layer | PHBH | | 98 | 95 | 98 | 98 | 95 | 98 | 100 | 98 | 95 |
| | PVA 1 (L-10) | Degree of saponification 71.5-73.5 | 2 | 5 | 2 | | | 2 | | | |
| | PVA 3 (5-88) | Degree of saponification 86.5-89.0 | | | | 2 | 5 | | | | |
| | PVA 4 (5-98) | Degree of saponification 98.0-99.0 | | | | | | | | 2 | 5 |
| | Weight per square meter | g/m² | 3 | 3 | 1 | 3 | 3 | 3 | 3 | 3 | 3 |
| | Thickness | µm | 2.5 | 2.5 | 0.8 | 2.5 | 2.5 | 2.5 | 2.5 | 2.5 | 2.5 |
| Evaluation results of coated paper | 60° glossiness | % | 9.8 | 10.5 | 10.2 | 10.4 | 10.9 | 9.8 | 9.9 | 10.5 | 10.3 |
| Evaluation results of laminated paper | Water resistance | | Excellent | Excellent | Excellent | Excellent | Excellent | Excellent | Good | Good | Good |
| | Oil resistance | | Excellent | Excellent | Excellent | Excellent | Excellent | Excellent | Good | Good | Good |
| | Lamination quality | | Good | Good | Good | Good | Good | Good | Poor | Poor | Poor |

Table 2 reveals that in the laminated paper of each of Examples 8 to 13, which was a laminate including the first and second resin layers, the first resin layer contained a given proportion of PVA having a given degree of saponification and that the laminated paper had good lamination quality.

In contrast, the laminated paper of Comparative Example 4, in which the first resin layer did not contain PVA, had insufficient lamination quality.

The laminated paper of each of Comparative Examples 5 and 6, in which the PVA contained in the coating layer did not have a given degree of saponification, had insufficient lamination quality.

### (Reference Example)

Sheets of first resin layer-coated paper were obtained in the same manner as first resin layer-coated paper was produced in Example 8, except that the drying for forming the first resin layer was accomplished by 2-minute heating at a temperature of 80°C, 100°C, 120°C, 140°C, 160°C, or 180°C. For each of the obtained sheets of coated paper, the 60° glossiness of the surface of the coating layer was measured by the method described above. The results are listed in Table 3.

**[Table 3]**

| | | | | | | |
|---|---|---|---|---|---|---|
| Heating temperature during formation of coating layer | 80°C | 100°C | 120°C | 140°C | 160°C | 180°C |
| 60° glossiness of coating layer (%) | 2.5 | 2.5 | 2.6 | 5.3 | 9.8 | 12.9 |
| Melting of PHBH | Did not occur | Did not occur | Did not occur | Occurred | Occurred | Occurred |

Table 3 reveals that in the cases where the drying temperature during the formation of the coating layer was in the range of 80 to 120°C, there was almost no difference in the glossiness of the coating layer and that in the cases where the drying temperature was 140°C or higher, the glossiness increased with increasing drying temperature. This is presumably because the PHBH in the coating layer melted due to heating during the drying and then got cooled and solidified, with the result that the surface smoothness of the coating layer was improved.

Additionally, the melting of the PHBH in the coating layer due to heating during the drying can provide an improvement in other properties such as adhesion between the coating layer and the paper substrate, heat sealability, and lamination quality.

## Claims

1. A laminate comprising a paper substrate layer and a first resin layer located on at least one side of the paper substrate layer, wherein
the first resin layer comprises a poly(3-hydroxybutyrate) resin and polyvinyl alcohol having a degree of saponification of less than 90 mol%, and
a solids weight ratio of the poly(3-hydroxybutyrate) resin to the polyvinyl alcohol is from 99.8/0.2 to 95.0/5.0.

2. The laminate according to claim 1, wherein
the poly(3-hydroxybutyrate) resin comprises a copolymer of 3-hydroxybutyrate units and other hydroxyalkanoate units.

3. The laminate according to claim 2, wherein
the other hydroxyalkanoates are 3-hydroxyhexanoate units.

4. The laminate according to any one of claims 1 to 3, wherein
the first resin layer has a surface facing away from the paper substrate layer, and
a glossiness of the surface of the first resin layer, as measured at an incident angle of 60° according to "Specular glossiness-Methods of measurement" of JIS Z 8741:1997, is 5% or more.

5. The laminate according to any one of claims 1 to 3, wherein
the first resin layer has a thickness of 0.5 to 30 µm.

6. The laminate according to any one of claims 1 to 3, further comprising a second resin layer located on the first resin layer, wherein
the second resin layer comprises a poly(3-hydroxybutyrate) resin.

7. The laminate according to any one of claims 1 to 3, for use as a packaging material.

8. The laminate according to any one of claims 1 to 3, for use as a paper container.

9. A molded article comprising the laminate according to any one of claims 1 to 3.

10. A method for producing a laminate, the method comprising forming a first resin layer on a paper substrate by applying an aqueous coating liquid to at least one side of the paper substrate and drying the applied aqueous coating liquid, wherein
the aqueous coating liquid comprises a poly(3-hydroxybutyrate) resin and polyvinyl alcohol having a degree of saponification of less than 90 mol%, and
a solids weight ratio of the poly(3-hydroxybutyrate) resin to the polyvinyl alcohol is from 99.8/0.2 to 95.0/5.0.

11. The method according to claim 10, wherein
a weight per square meter of the first resin layer, as measured according to JIS P 8124, is from 1 to 30 g/m².

12. The method according to claim 10 or 11, wherein
the drying is accomplished by heating to a temperature of 130 to 180°C.

13. The method according to claim 10 or 11, further comprising forming a second resin layer on the first resin layer, wherein
the second resin layer comprises a poly(3-hydroxybutyrate) resin.

14. The method according to claim 13, wherein
the second resin layer is formed by extrusion lamination or thermal lamination.
